# EUROPEAN PATENT APPLICATION

(11) **EP 4 401 027 A1**
(43) Date of publication of application: **17.07.2024**
(21) Application number: 23217167.8
(22) Date of filing: 15.12.2023
(51) Int. Cl.: G06Q 30/0242

(54) **DATA MONITORING SYSTEM**

(30) Priority: 10.01.2023 SE 2350009
(71) Applicant: Tobii AB, 182 17 Danderyd (SE)
(72) Inventor: Rudic, Jovan, 18217 Danderyd (SE)

(57) **Abstract**

The present invention relates to a data monitoring system comprising a portable device comprising a processor, a display and an eye tracking device which provides gaze information relating to a user's gaze on the display, wherein the processor is configured to:
execute data collection by monitoring information displayed on the display to determine the presence of an advertisement on the display;
monitor information transmitted to or from the portable device to determine the existence of an advertisement in said information; and
determine that if an advertisement has been transmitted to the portable device and displayed on the display, gather gaze information relating to the display at the time the advertisement was displayed.

The invention also relates to a corresponding method for monitoring data, a portable device and a computer-readable medium

## Description

### Technical Field

The present invention relates to a data monitoring system and method for monitoring data and determining advertisement information within said data.

### Background

With the increase in use of digital devices such as mobile telephones, tablets, and computers over recent years, advertising has increased at a commensurate pace. Central to any advertising model is the ability to determine if your advertisements have reached their target audience, and more importantly if your target audience has viewed said advertisements.

Traditionally measuring such information has been difficult and limited to purely determining whether an advertisement has been served or displayed to a user. Whether that user has actually viewed the advertisement has been proposed previously to be determined via an eye tracking device.

Eye tracking devices are not new and exist in many different shapes and forms, one popular eye tracking device uses infrared light to illuminate a user's cornea and create reflections, an image sensor then captures images of the eye and a processor determines the user's gaze direction based on the location of the reflections and other characteristics of the captured images.

Using an eye tracking device to determine if an advertisement has been viewed on a display by a user requires one crucial piece of information: the location of the advertisement on the display. In situations where this information is not known, it is not possible to determine if a user has viewed the advertisement.

### Summary of the Invention

An object of the present disclosure is to limit or mitigate for at least one of the issues described above.

According to a first aspect, there is provided a data monitoring system comprising a portable device comprising a processor, a display and an eye tracking device which provides gaze information relating to a user's gaze on the display; wherein the processor is configured to:
execute data collection by monitoring information displayed on the display to determine the presence of an advertisement on the display;
monitor information transmitted to or from the portable device to determine the existence of an advertisement in said information; and
determine that if an advertisement has been transmitted to the portable device and displayed on the display, gather gaze information relating to the display at the time the advertisement was displayed.

According to an embodiment, determining that an advertisement is present on the display is accomplished if keywords such as "advertisement", or "ad" are in the information displayed on the display.

According to an embodiment, determining the existence of an advertisement in said data is based on the presence of keywords such as "advertisement", or "ad" in said data.

The processor may be further configured to store at least one of the following information relating to the advertisement: time the advertisement was displayed, location on the display of the advertisement, and size of the advertisement.

In the data monitoring system according to an embodiment, the gaze information may include the position and duration of gaze on the display.

According to a second aspect, there is provided a method for monitoring data presented on a display of a portable device, wherein the portable device comprising a processor, a display and an eye tracking device which provides gaze information relating to a user's gaze on the display, the method comprising:
executing data collection by monitoring information displayed on the display to determine the presence of an advertisement on the display;
monitoring information transmitted to or from the portable device to determine the existence of an advertisement in said information; and
determining that if an advertisement has been transmitted to the portable device and displayed on the display, gathering gaze information relating to the display at the time the advertisement was displayed.

In an embodiment, determining that an advertisement is present on the display occurs if keywords such as "advertisement", or "ad" are in the information displayed on the display.

In an embodiment, determining the existence of an advertisement in said data is based on the presence of keywords such as "advertisement", or "ad" in said data.

In the method according to an embodiment, the processor is further configured to store at least one of the following information relating to the advertisement: time the advertisement was displayed, location on the display of the advertisement, and size of the advertisement.

In the method according to an embodiment, the gaze information includes the position and duration of gaze on the display.

According to a third aspect, a portable device is provided comprising a data monitoring system comprising the features as described in respect to a first aspect.

According to a fourth aspect, computer-readable medium is provided having stored thereon instructions that, when executed by one or more processors cause execution of the method steps according to the second aspect.

The effects and/or advantages presented in the present disclosure for embodiments of the data monitoring system according to the first aspect may also apply to corresponding embodiments of the method according to the second aspect, the portable device according to the third aspect and the computer-readable medium according to the fourth aspect.

### Brief Description of the Drawings

Specific embodiments will now be described in detail with reference to the accompanying drawings, in which:

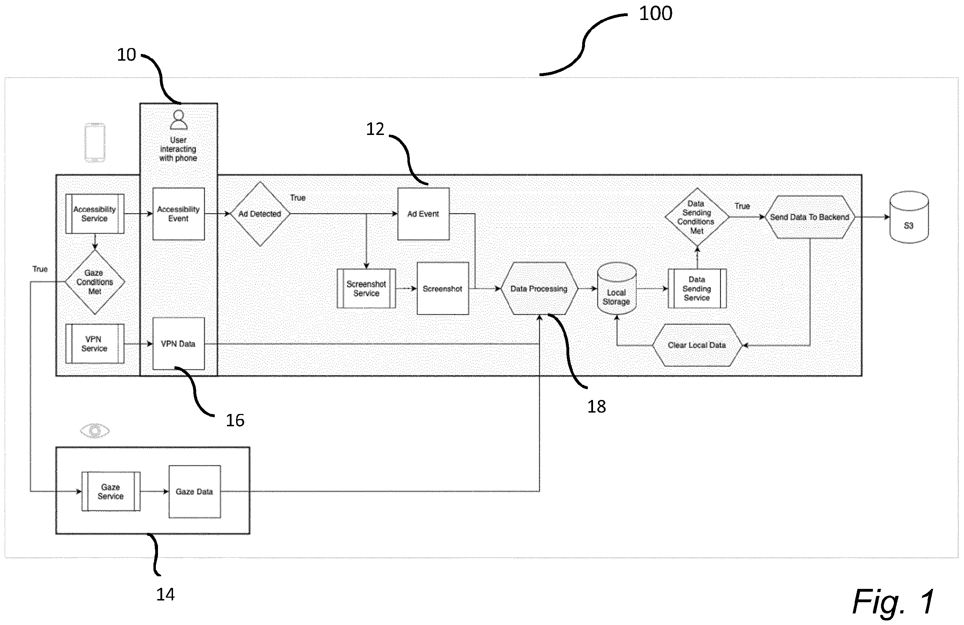

**Figure 1** shows a schematic overview of a data monitoring system, according to one or more embodiments.

All the figures are schematic, not necessarily to scale, and generally only show parts which are necessary in order to elucidate the respective embodiments, whereas other parts may be omitted or merely suggested. Throughout the description and the drawings, like reference numerals refer to like parts.

### Detailed Description

Aspects of the present disclosure will be described more fully hereinafter with reference to the accompanying drawings. The devices and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

The ensuing description provides exemplary embodiments only, and is not intended to limit the scope, applicability or configuration of the disclosure. Rather, the ensuing description of the exemplary embodiments will provide those skilled in the art with an enabling description for implementing one or more exemplary embodiments. It being understood that various changes may be made in the function and arrangement of elements without departing from the spirit and scope of the invention as set forth in the appended claims.

For example, any detail discussed with regard to one embodiment may or may not be present in all contemplated versions of that embodiment. Likewise, any detail discussed with regard to one embodiment may or may not be present in all contemplated versions of other embodiments discussed herein. Finally, the absence of discussion of any detail with regard to embodiment herein shall be an implicit recognition that such detail may or may not be present in any version of any embodiment discussed herein.

Specific details are given in the following description to provide a thorough understanding of the embodiments. However, it will be understood by one of ordinary skill in the art that the embodiments may be practiced without these specific details. For example, circuits, systems, networks, processes, and other elements in the disclosure may be shown as components in block diagram form in order not to obscure the embodiments in unnecessary detail. In other instances, well-known circuits, processes, algorithms, structures, and techniques may be shown without unnecessary detail in order to avoid obscuring the embodiments

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process may be terminated when its operations are completed but could have additional steps not discussed or included in a figure. Furthermore, not all operations in any particularly described process may occur in all embodiments. A process may correspond to a method, a function, a procedure, a subroutine, a subprogram, etc. When a process corresponds to a function, its termination corresponds to a return of the function to the calling function or the main function.

The term "computer-readable medium" includes, but is not limited to transitory and nontransitory, portable or fixed storage devices, optical storage devices, wireless channels and various other mediums capable of storing, containing or carrying instruction(s) and/or data. A code segment or computer-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

When implemented in software, firmware, middleware or microcode, the program code or code segments to perform the necessary tasks may be stored in a computer-readable medium. A processor(s) may perform the necessary tasks.

Portable devices are devices capable of being worn by a user, typically they take the form of a mobile phone, a smartwatch, a digital assistant and/or the like. These devices may incorporate various forms of sensors, displays, and/or electronics. For example, a portable device may contain an image sensor for capturing images of user's eyes when directed to the display for viewing a content presented on a display. As an example, the image sensor may be an infrared (IR) image sensor, an RGB sensor, an RGBW sensor, or an RGB or RGBW sensor with an IR filter. Other types of image sensor may also be envisaged. The display may be a liquid-crystal display (LCD),an LED/AMOLED/OLED display or similar, which is known for a skilled person. However, other types of displays may also be envisaged. The display may be flat or curved.

The portable device (not shown) may also contain an eye tracking device. It is therefore possible to combine images captured by the image sensor/camera of the portable device with information from the eye tracking device, to determine where in a particular display of the portable device a user is looking. The eye tracking device, the image sensor, and the display may be communicatively connected to a control unit, for example via a suitable wired or wireless connection. The eye tracking device and the image sensor may relay information derived therefrom to the control unit for processing and/or wireless or wired communication back to another computing/processing device/system located remotely from the portable device, e.g., in a different device, a server, a cloud and/or similar. The control unit, comprising one or more processors, may send/receive instructions or information to be displayed to the user to the display.

As will be apparent to a skilled person, an eye tracking device is usually configured to capture images of the eye of a user in order to determine a gaze of the user in terms of a gaze vector, a gaze direction and/or a gaze point. To achieve this, the eye tracking device may include one or more image sensors and optionally one or more illuminators. The one or more image sensors are configured to capture images of the eye while the user is interacting with the portable device. The one or more illuminators are configured to illuminate an eye of the user. As will be understood, the image sensors and/or illuminators may be integral with the portable device or external to the portable device. The illuminators may be, for example, infrared or near infrared illuminators, for example in the form of light emitting diodes (LEDs). However, other types of illuminators may also be envisaged. The eye tracking device may relay information to the control unit for processing and/or wireless or wired communication back to a remote processing device, e.g., in a different device, a server, a cloud and/or similar. Eye tracking may be performed to estimate a position of a part of an eye and/or a gaze of the user for the left and right eyes separately.

The control unit of the portable device may comprise one or more processors. The processor(s) may be application-specific integrated circuits (ASIC) configured to perform a specific eye tracking and position determination method. Alternatively, the processor(s) may be configured to execute instructions (for example in the form of a computer program) stored in one or more memories. Such a memory may be comprised in the portable device, or may be external to the portable device. The control unit may also be configured to provide power for the eye tracking device.

The present invention seeks to overcome the above-mentioned problems in situations, where the information about where on a display the advertisement is shown, is not known, because it results in a case that it is not possible to determine if a user has viewed the advertisement. Without this information, it's impossible to evaluate performance of digital content and ads. The solution to these problems is presented, generally, as by providing a method whereby information being transmitted to or from a device may be used to determine if an advertisement has been displayed on the device, and further using that information to determine the location of the advertisement on the display and relevant gaze information thereto. The solution is performed in a data monitoring system.

On a high level, the present invention may be described as comprising two main components. The first component is a Data Collection Software running on a suitable device, preferably the portable device, which provides information relating to the activity of the user interface (UI) displayed on the device. An example of such software is the Accessibility Service provided by the Android operating system for use on portable devices. As it is known to a skilled person, an accessibility service is an application that provides user interface enhancements to assist users with disabilities, or who may temporarily be unable to fully interact with a device. The second component of the present invention is a Network Monitoring Software for capturing network data transmitted to and from the portable device. An example of such software is a Virtual Private Network (VPN).

A first embodiment of the present invention will now be described in more details.

Data Collection Software is provided on a portable device, whenever elements are displayed on the portable device, information about the elements and any changes made thereto is provided by the Data Collection Software. This information may include, but is not limited to timestamps, position and size of the elements, and text in the elements. The information is searched according to the present invention for information which may indicate it relates to an advertisement, this may be searching for words in the information such as "Ad", "Sponsored", "Advertisement" etc. If it is determined that an advertisement may possibly exists, any data relating to the relevant elements as well as a screenshot of the elements is stored on the device.

Further, Network Monitoring Software is provided on the portable device, where any network information sent or received by the portable device is captured and processed on the device. According to the present invention, this network information is analysed and then released. To explain further, if information is sent to the portable device from a remote device on the network, according to the present invention, said information would be captured by the Network Monitoring Software, analysed, and then released to its original target. According to the present invention the network information is analysed to determine if any of the network information may pertain to an advertisement.

According to the present invention, information from the Data Collection Software is matched with information from the Network Monitoring Software to determine the time an advertisement was displayed, and its size and location on the display. By way of example, information transmitted to the portable device relating to an advertisement may be detected by the Network Monitoring Software, using the timestamp of the detected information, it may be matched with information on the display at that timestamp captured by the Data Collection Software.

Once two pieces of information are matched, the screenshot of the elements captured by the Data Collection Software at the timestamp may be analysed by an algorithm such as a machine learning algorithm to determine the exact location of the advertisement on the display of the portable device. The contextual information from the matching may be further used in creating an Impression Model. An example of an Impression Model is described in U.S. Patent Application 17/687,147, the content of which is hereby incorporated in its entirety.

Optionally or additionally, the portable device may further contain an eye tracking device capable of determining a user's gaze position relative to the display of the portable device. This gaze information may be matched with the previously described information to determine a user's gaze relative to an advertisement. An Impression Model may be based on a beacon information and the gaze information received from one or plurality of user(s). The Impression Model may be provided by defining, based on the beacon information, impressions representing respective instances of a content object appearing on a web page and/or mobile phone application and, for each impression, determining, based on the beacon information, impression parameters representative of a content object associated with the impression and determining, based on the gaze information, attention parameters representative of a user's fixation on the content object associated with the impression when appearing on a web page and/or mobile phone application presented on a portable device. From this, a user's interest in the advertisement may be inferred.

One embodiment of the present invention will now be described with reference to Figure 1. Figure 1 shows a data monitoring system 100.

In this embodiment, the Accessibility Service provided by the Android operating system is used as the Data Collection Software, and the Network Monitoring Software is labelled "VPN Service" in Figure 1. Both Data Collection Software and Network Monitoring Software may be run on the processor of the control unit of the portable device.

As shown at 10, the user interacts with the portable device and the Data Collection Software registers an Accessibility Event. It will be understood that Data Collection Software may be executed on the processor of the portable device and may execute the data collection by monitoring information displayed on the display to determine the presence of an advertisement on the display. The processor is further configured to monitor information transmitted to or from the portable device to determine the existence of an advertisement in said information. Although a flowchart in Figure 1 describes the operations 12 and 16 as being executed in parallel, these operations can be performed concurrently as a sequential process. According to the present invention, if an advertisement is detected, a screenshot is captured as well as information relating to the advertisement at 12. The screenshot can be taken by a known screenshot service and is apparent to a skilled person. This information is processed at 18 along with gaze information 14 from the eye tracking device, and VPN data from 16, which will now be further described.

An example of the implementation step will now be described in more details. A user may open a social network application on his/her mobile phone through Accessibility Service. The application received Accessibility Event which contains the entire screen/display. The Accessibility Event comprises the information such as position and size on screen of starting parent element, but the information of the entire screen element does not provide any hints on whether and if so, where on the screen/display a potential advertisement is being shown. In order to gain such additional information, the detection algorithm needs to take into account all child nodes in order to determine the existence of an advertisement in said information.

The Network Monitoring Software monitors information sent to the portable device at 16, and sends any information which may relate to an advertisement for processing at step 18. The Network Monitoring Software may be executed at the processor of the portable device. The Network Monitoring Software is shown as "VPN Service" with related "VPN Data" in Figure 1. In contrast to common remote VPN servers, the Network Monitoring Software of the current invention simulates a VPN in order to capture the network traffic with all the data being processed locally on the portable device. The data monitoring system in this embodiment, as an example, may use Android's VPN APIs to generate a file descriptor that backs a network tunnel interface. Such network tunnel provides for a loss-free package transmission to and from the portable device, meaning that each Internet Protocol packet is buffered behind the file descriptor. The data monitoring system is, hence, provided with high quality data/information that can be used to detect whether an advertisement is transmitted to the portable device without interfering with the network connection of the portable device.

In an embodiment, the step of determination that an advertisement is present on the display is accomplished if keywords such as "sponsored", "advertisement", or "ad" /similar are in the information displayed on the display. The keywords may be identified in the file descriptors described above, with the known methods of working with data in string format. In an alternative embodiment, the step of determination of the existence of an advertisement in the data transmitted to the portable device, is based on the presence of keywords such as "sponsored", "advertisement", or "ad"/similar in said data. The keywords may be identified in the file descriptors described above, with the known methods of working with data in string format. Such keyword identification may be performed in both the Data Collection Software and/or the Network Monitoring Software, where appropriate, and understood by a skilled person.

The gaze service at 14, which may be a part of an eye tracking device, sends gaze information relating to where the user is gazing on the portable device for processing at step 18.

At processing step 18 the collected information is processed to determine if an advertisement has been displayed on the portable device, and if so, the processor is further configured to determine whether the user viewed the advertisement using the gaze information. The result of this processing is stored locally on the portable device before being transmitted to a remote location for possible further analysis. The result of such processing is also of value when optimizing the spending on digital content advertising for a media campaign.

## Claims

1. A data monitoring system comprising:
a portable device comprising a processor, a display and an eye tracking device which provides gaze information relating to a user's gaze on the display;
wherein the processor is configured to:
execute data collection by monitoring information displayed on the display to determine the presence of an advertisement on the display;
monitor information transmitted to or from the portable device to determine the existence of an advertisement in said information; and
determine that if an advertisement has been transmitted to the portable device and displayed on the display, gather gaze information relating to the display at the time the advertisement was displayed.

2. The data monitoring system of claim 1, wherein determining that an advertisement is present on the display if keywords such as "advertisement", or "ad" are in the information displayed on the display.

3. The data monitoring system of claim 1, wherein determining the existence of an advertisement in said data is based on the presence of keywords such as "advertisement", or "ad" in said data.

4. The data monitoring system of claim 2, wherein the processor is further configured to store at least one of the following information relating to the advertisement: time the advertisement was displayed, location on the display of the advertisement, and size of the advertisement.

5. The data monitoring system of claim 1, wherein the gaze information includes the position and duration of gaze on the display.

6. A method for monitoring data presented on a display of a portable device, wherein the portable device comprising a processor, a display and an eye tracking device which provides gaze information relating to a user's gaze on the display, the method comprising:
executing data collection by monitoring information displayed on the display to determine the presence of an advertisement on the display;
monitoring information transmitted to or from the portable device to determine the existence of an advertisement in said information; and
determining that if an advertisement has been transmitted to the portable device and displayed on the display, gathering gaze information relating to the display at the time the advertisement was displayed.

7. The method of claim 6, wherein determining that an advertisement is present on the display occurs if keywords such as "advertisement", or "ad" are in the information displayed on the display.

8. The method of claim 6, wherein determining the existence of an advertisement in said data is based on the presence of keywords such as "advertisement", or "ad" in said data.

9. The method of claim 7 or 8, wherein the processor is further configured to store at least one of the following information relating to the advertisement: time the advertisement was displayed, location on the display of the advertisement, and size of the advertisement.

10. The method of claim 6, wherein the gaze information includes the position and duration of gaze on the display.

11. A portable device comprising a data monitoring system according to claim 1.

12. A computer-readable medium having stored thereon instructions that, when executed by one or more processors cause execution of the method steps according to any of claims 6 to 10.
